# EUROPEAN PATENT APPLICATION

(11) **EP 1 132 000 A1**
(43) Date of publication of application: **12.09.2001**
(21) Application number: 01104979.8
(22) Date of filing: 01.03.2001
(51) Int. Cl.: A21B 3/13, H05B 6/64, B65D 81/34

(54) **Flexible mould for confectionery and bread-making**

(30) Priority: 06.03.2000 IT MI000432; 18.10.2000 IT MI000590 U
(71) Applicant: Meroni, Bruno, 20075 Lodi (IT); Fortunato, Aldo, 20063 Cernusco sul Naviglio (IT)
(72) Inventor: Meroni, Bruno, 20075 Lodi (IT)
(74) Representative: La Ciura, Salvatore

(57) **Abstract**

This invention proposes a flexible mould for confectionery and breadmaking completely made of silicone, wherein near one or more walls, at least one silicone coating charged with ferrite finely, pulverised is provided.

The introduction of the ferrite into the mould causes, in the microwave oven, a release of heat which locally raises the temperature in such a way as to give a "browning" effect to the product.

In addition, the mould results to be sufficiently resistant even if made with relatively thin walls and offers a considerable flexibility which allows to deform the mould to extract the product without breaking it and to bend the mould to store it into a reduced space.

A support element applied to said edge is provided in order to give the mould a certain resistance, such as to avoid any deformation under the strain of the content.

Preferably the support is dipped into the silicone near the peripheral portion of the edge and it consists of a metallic threadlike element.

Alternatively the support may be formed by a plastic frame co-stamped with the tray.

## Description

This invention relates to a flexible mould or pan for confectionery and bread-making, which is made of silicone and is provided, near at least one wall, in particular just near the bottom, at least of a silicone layer mixed to ferrite or other suitable charge.

This embodiment allows during the cooking of foods in microwave ovens, near this layer, the release of an amount of heat, which considerably raises the temperature in this area and, consequently, the temperature inside the oven, thus allowing to obtain also the so-called "browning" of the foods.

In particular, the mould according to the invention consists of a duly shaped tray, with silicone walls of suitable thickness, with an upper edge opened outwards, which allows to easily handle the product, and with the silicone button with an extender of finely pulverised ferrite or other suitable charge.

The tray can also be made entirely of silicone mixed wirh ferrite or other suitable charge.

Beside reaching temperatures considerably higher than those usually obtained in the microwave ovens, the mould results to be adequately resistant even if made with relatively thin walls and likewise offers a high flexibility which allows to deform the mould to pull out the product, without breaking it.

In addition, the above mentioned flexibility features also allow to deform and flatten the tray, in order to store it into a reduced space.

In accordance to a feature of the invemtion, this edge is equipped with a support and stiffening element, preferably consisting of a metallic wire dipped in the silicone or of plastic or metallic frames partially co-stamped at sight.

This feature considerably improves the handling of the tray, especially when it contains very liquid products, keeping unchanged those flexibility features that make easier to take fragile contents out of the oven and to deform and flatten it in order to store it into a reduced space.

As it is known, generally the moulds for confectionery and bread-making are made of metallic material, such as for example aluminium or ceramic, vitreous material or similar.

In particular the moulds made of non-metallic materials are suitable to cook foods in the microwave oven, wherein it is not possible to introduce metallic trays.

All the known moulds present, in any case, some disadvantages mainly due to the fact that, since they are rigid and indeformable, it is difficult to take the product out of the oven, which during the cooking tends to stick to the tray's walls and therefore the extraction requires a certain ability in order to avoid to break it.

To make this operation easier it is customary to oil the mould surface, but also this technique results poorly efficient.

In addition, the rigid moulds are cumbersome and take up too much room when they must be stored.

Recently, flexible moulds have been put on the market, made of fabric of suitable fibres, coated with synthetic materials among which silicone.

But in this case the synthetic material is provided for used to waterproof the fibre fabric and to prevent the dough from coming out.

But such known moulds imply considerable difficulties of production, since there is the need to give to the fibre a particular disposition which allow their consequent depoosition on a shape that gives to the mould the desired form, the application of the silicone on the fabric through smearing results to be an arduous operation.

Beside that, since the final form is given to the mould through drawing, very deep moulds cannot be obtained.

In addition fabric moulds, even if deformable, cannot be extended and therefore there is a certain difficulty in removing the product without breaking it.

This invention is included in this sector and aims, on the one hand, at overcoming the above mentioned disadvantages and limitations, proposing a flexible mould completely made of silicone, and on the other hand at allowing to overcome the limitations presently implied in the cooking method by means of microwaves ovens.

It is known that in the common microwave ovens it is not possible to reach temperatures higher than 120-130°C, temperatures sufficient to cook the foods but insufficient to give that "golden" and crispy aspect to their surfaces.

In order to achieve this objective resort is to be made to mixed ovens which provide, in addition to the microwave generator, also a resistance able to locally release a temperature high enough to give the required "browning" to the product.

Also this limit is overcome by the mould according to the invention, which is characterised by the fact to present, just near at least one wall, in particular near the bottom, a silicone material coating with an extender of finely pulverised ferrite or other charge.

Under the effect of the microwaves the ferrite or the other charge releases such a amount of heat to locally raise the temperature to considerably higher values than those that can be reached with the simple microwaves, reaching even temperatures higher than 200°C.

This allows to obtain, on the cooked product surface, the typical crusts that, previously, were obtained only through the resort to mixed-type ovens, i.e. ovens which included both a microwaves generator and a heating resistance.

Moreover, to avoid possible difficulties when it is necessary to handle the moulds keeping then by hteis edges, as usual, with the risk to split part of the product, in particular if such product is very liquid, this invention proposes a silicone mould characterised by the fact to provide, near the edge, a support and stiffening element able to give the mould the resistance required to carry the weight of the product without being deformed, keeping the flexibility features which allow to guarantee other advantages listed above.

This invention will be described in details, by way of example without any limitation thereto, with reference to the attached figures, where:
- figure 1 schematically shows the section of a mould carried out by the techniques of this invention;
- figure 2 is the section of a multiple mould for confectionery always made according to the invention;

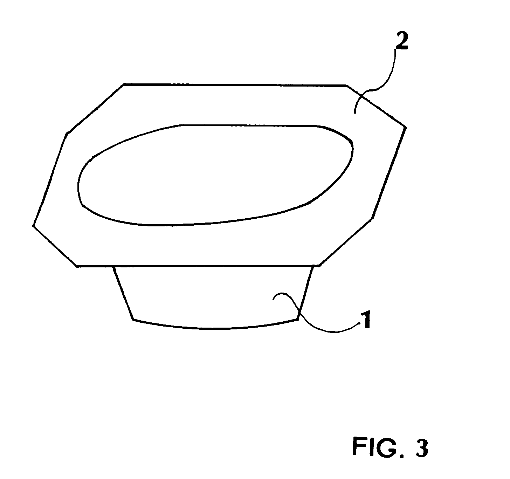

- figure 3 is the perspective view schematically showing a mould according to the invention;

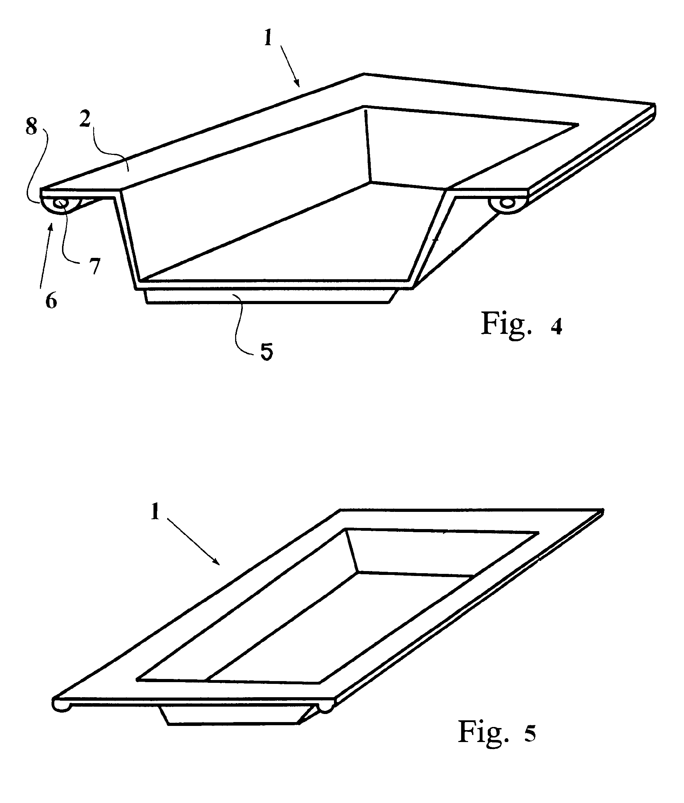

- figure 4 represents the section of a mould according to the invention;
- figure 5 is the perspective view of the mould of figure 1;
- figures 6 and 7 are perspective views, in section, of a further form of execution of said idea of solution.

With reference to the attached figures, the mould according to the invention essentially consists of a tray 1, wherein the product to be cook is introduced and which presents, on the upper side, an edge 2 projecting outwards.

Feature of the invention consists in the fact of providing a mould body completely made of silicone and to provide also, near at least one wall, in particular near the bottom, a silicone layer 3 charged with material suited to generate, under the effect of the microwaves releasing in the oven during the cooking, a considerable amount of heat.

In particular the coating 3 consists of silicone with an extender of ferrite finely pulverised.

The ferrite can be directly incorporated into the silicone used for making the mould, or can be inseted in a layer that is bonded or co-stamped with the walls of the tray itself.

The silicone material used to make the mould can tolerate the high temperatures of the oven and turned out to be particularly suited to this use since it presents a rigidness sufficient to contain the product without excessive deformations of the walls, but it is likewise flexible and elastic enough, so that it is possible, by slightly pulling the edges, to separate the side walls of the tray from the product which can be easily expelled, for example applying a certain pressure on the button.

The fact to provide near at least one wall a silicone material coating charged with ferrite allows to reach, in this area and consequently in the entire oven, temperatures considerably higher than those usually reached in the microwave ovens, in particular temperatures which can exceed 200°C and which can give rise to the formation of the so-called "crusts" on the cooked product surface giving also that "browning" aspects that, previously, was obtained only through the resort to the use of resistance or other heating means coupled to the microwaves.

The silicone coating charged with ferrite or other suitable charge may be applied to one or more walls of the mould, or the mould may be made directly and wholly of this material.

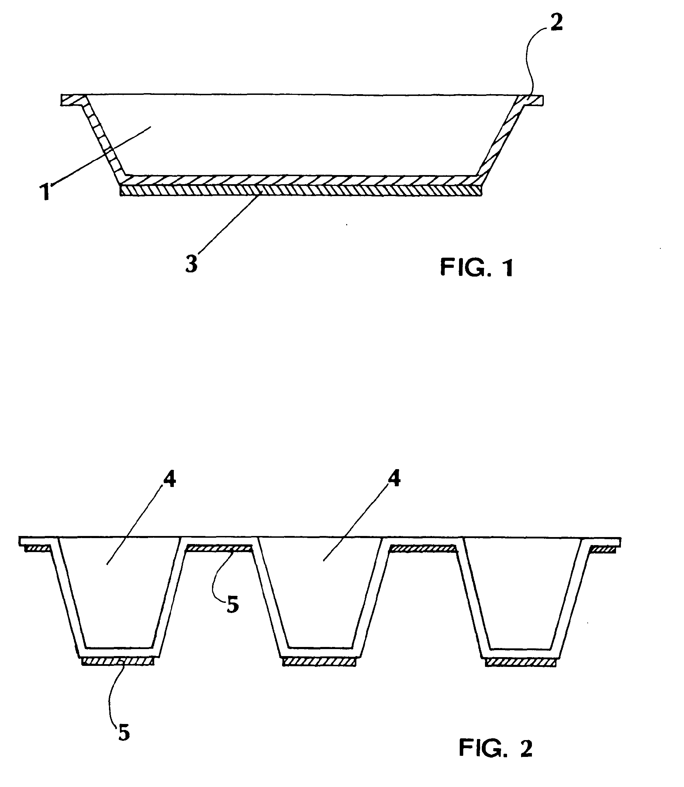

Figure 2 shows a mould for confectionery which includes a plurality of shapes 4, with silicone coatings charged with ferrite indicated with 5 applied both near the button and on the upper walls of the mould.

Also in this case there is a local release of heat which increases the temperature near the product surface, to obtain the required effect.

The thickness of the walls will be suited to the mould dimensions, which in its turn may be carried out by means of various technologies, for example through stamping, co-stamping, gluing or similar.

The mould may be bent or pressed to be stored into a reduced space, and also this operation is helped by the material deformability.

According to a further embodiment of the invention, it is provided, near the perimetral area of the edge or wing 2, a support indicated with 6, essentially consisting of a metallic element 7, preferably a metallic wire such as steel or similar, dipped into a silicone coating 8.

The stiffening wire will have such dimensions as to allow the mould not to bend under the strain of the content, but such as to allow in any case a sufficient flexibility of the wings 2 and of the entire tray body also if made of plastic.

The material can be steel or, in any case, other suitable material.

The stiffening element 7 can be directly incorporated into the mould during the injection of the silicone material, or, if necessary, it may also be applied afterwards, duly covered by a silicon sheath.

Through this solution the mould may be easily handled, gripping it by the edges, even when it contains a liquid product, because the resistance of the support element 7 allows the mould to keep its shape without bending under the strain of the content. The silicone flexibility will always allow to easily take the product out, to press the mould and to store it taking up a minimum space.

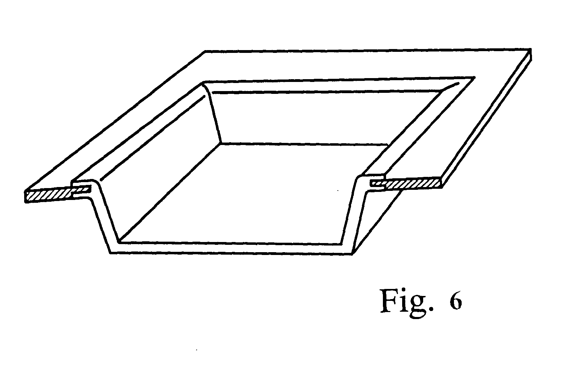

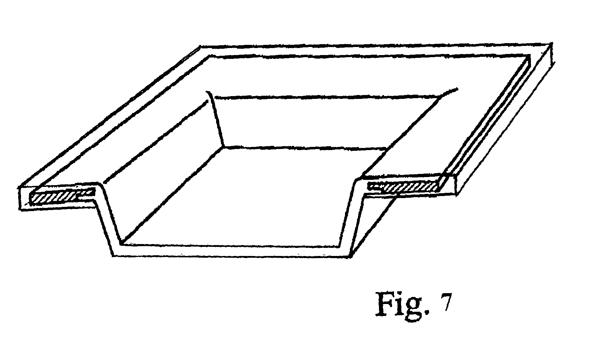

In particular, in lieu of the metallic support element, one can provide a rigid plastic frame co-stamped with the silicon edge or taking the place of the latter, for example by applying pressure to the mould body, as shown in figures 6 and 7.

In the case of moulds having several shapes, the invention provides for the insertion of a co-stamped or glued reinforcing net made of steel or fo thermoplastic or themohardening material.

A skilled in the art may make changes and different versions that must be considered included within the competence of this invention as defind by the appended claims.

## Claims

1. Mould for confectionery and bread-making, characterised by the fact to be made of silicone ant to provide, near one or more walls, at least one silicone layer mixed to metallic powder or other suitable charge, able to release heat through the microwaves.

2. Mould for confectionery and bread-making according to claim 1, characterised by the fact to provide, near one or more walls, at least a silicone coating charged with ferrite finely pulverised or other suitable charge.

3. Mould according to claim 2, characterised by the fact that said coating of ferrite or other suitable charge is applied near the bottom.

4. Mould according to claim 3, characterised by the fact to be completely made of silicone charged with ferrite finely pulverised or other suitable charge.

5. Mould according to any one of the preceding claims, characterised by the fact to include a tray presenting, on the upper side, an edge extending outwards, made of silicone in a single piece with said tray.

6. Mould according each of the preceding claims, characterised by the fact to be produced through stamping and co-stamping.

7. Mould according to each of the claims 1 to 5, characterised by the fact to be made through gluing.

8. Flexible mould for confectionery and bread-making according to claim 1, with an edge projecting outwards, characterised by the fact to provide a reinforcing element applied to said edge to give the mould a certain resistance, such as to avoid any deformation under the strain of the content.

9. Flexible mould according to claim 8, characterised by the fact that the support is dipped into silicone.

10. Flexible mould according to claim 9, characterised by the fact that the support element is dipped into the silicone near the peripheral portion of the edge.

11. Flexible mould according to claim 9, characterised by the fact that said support element is formed by a threadlike metallic element.

12. Flexible mould according to claim 9, wherein said support element is formed by a plastic element applied to the tray.

13. Flexible mould according to claim 12, wherein said frame is co-stamped with the tray.

14. Flexible multi-shape mould according to the preceding claims, wherein the reinforcing element is made of a net applied to or incorporated into the mould.
